Europäisches Patentamt

European Patent Office

Office européen des brevets

(19)

(11) Veröffentlichungsnummer: **0 133 587**
**B1**

(12) **EUROPÄISCHE PATENTSCHRIFT**

(45) Veröffentlichungstag der Patentschrift: **24.10.90**

(51) Int. Cl.⁵: **A 01 J 25/02**

(21) Anmeldenummer: **84109612.6**

(22) Anmeldetag: **13.08.84**

(54) **Käsefertiger.**

(30) Priorität: **16.08.83 AT 2941/83**

(43) Veröffentlichungstag der Anmeldung:
**27.02.85 Patentblatt 85/09**

(45) Bekanntmachung des Hinweises auf die
Patenterteilung:
**24.10.90 Patentblatt 90/43**

(84) Benannte Vertragsstaaten:
**BE CH DE FR IT LI LU NL**

(56) Entgegenhaltungen:
**CH-A- 428 305**
**DE-A-2 208 443**
**DE-C- 915 758**
**US-A-3 988 011**

(73) Patentinhaber: **Schwarte-Werk GmbH**
**Berliner Strasse 10**
**D-2059 Büchen (DE)**

(72) Erfinder: **Timte, Peter**
**Im Dahläckern 22**
**D-4358 Haltern 1 (DE)**

(74) Vertreter: **Glaeser, Joachim, Dipl.-Ing.**
**Patentanwalt Königstrasse 28**
**D-2000 Hamburg 50 (DE)**

Courier Press, Leamington Spa, England.

EP 0 133 587 B1

## Beschreibung

Die Erfindung bezieht sich auf einen Käsefertiger nach dem Oberbegriff des Anspruchs 1.

Bekannte Käsefertiger dieser Art (CH—A— 428 305), die in der Praxis mit Fassungsvolumen von 24000 l und mehr ausgeführt werden, haben einen ebenem, im Umriß der Form der Behälterwand entsprechenden Boden und bedürfen zu ihrer restlosen Entleerung entweder einer ständigen Schrägaufstellung, durch die der Boden zur Ablauföffnung hin geneigt ist, oder bei horizontaler Aufstellung während des Betriebs einer Kippvorrichtung, durch die der Käsefertiger für Entleerungsvorgänge schrägstellbar ist.

Eine ständige Schrägstellung des Käsefertigers hat zur Folge, daß die Füllhöhe im Betrieb unterschiedlich und bei vorgegebener gleichbleibender Wandhöhe das Volumen des Behälters nicht vollständig ausnutzbar ist. Hinzu kommen unerwünschte Schwerkrafteinflüsse durch die Schrägstellung bei Schneid- und Rührvorgängen. Ein ebener Boden bedarf im übrigen wegen seiner geringen Eigensteifigkeit gegen Verformungen in Richtung senkrecht zu Bodenebene erheblicher Versteifungen.

Eine Ausführung eines Käsefertigers mit Kippvorrichtung bedarf ebenfalls eines erheblichen baulichen Aufwandes, da der Behälter gelenkig an einem Bodengestell abgestützt sein muß, eine Kippvorrichtung sowie Verstärkungen für ein verfurmungsfreies Kippen benötigt und schließlich elastische Verbindungen in Form von Schlauchleitungen od.dgl. erfordert, damit die Zu- und Abläufe Kippbewegungen erlauben. Solche elastischen Verbindungen erfordern nicht nur zusätzliche Kosten, sondern bilden auch Infektionsquellen sowie Gefahrenquellen für Undichtigkeiten, z.B. aufgrund eintretender Porosität im Schlauchmaterial.

Der Erfindung liegt die Aufgabe zugrunde, einen baulich einfachen, fest aufstellbaren und dabei dennoch restlos entleerbaren Käsefertiger zu schaffen, der besonders eigenstabil und zugleich reinigungsfreundlich ist.

Zur Lösung dieser Aufgabe ist der Käsefertiger nach der Erfindung gekennzeichnet durch die im kennzeichnenden Teil des Anspruchs 1 angegebenen Merkmale. Hinsichtlich wesentlicher weiterer Ausgestaltungen wird auf die Ansprüche 2 bis 8 verwiesen.

Durch die besondere, allenthalben Kegelflächen darbietende Bodengestaltung des erfindungsgemäßen Käsefertigers ist eine rasche und restlose Entleerung des Behälters unter Ausschluß der Gefahr von Rückständen auf dem Boden gewährleistet. Daher können sonst notwendige Nachspülungen entfallen oder auf ein Mindestmaß reduziert werden. Durch seine besondere Raumform ist der Boden in sich selbst besonders stabil, so daß Verstärkungen des Bodens, aber auch etwa der Behälterwandung entfallen können. Der Käsefertiger kann dabei eine feste, horizontal ausgerichtete Aufstellung erhalten und fest an Verbindungsleitungen angeschlossen werden. Im Schneid- und Rührbetrieb wird die gesamte im Behälter enthaltene Gutmasse vollständig erfaßt und frei von Qualitätsminderungen bearbeitet.

Es sind auch zylindrische Käsefertiger mit einem Kegelförmigen Behälterboden bekannt (DE—C—915 758), wobei die Schneid- und Rührflügel koaxil zum Gehäuse angeordnet sind. Wenn gleich hier keine Entleerungsprobleme auftreten, so ist doch der erzeugte Käse wegen der Stromungsverhältnisse im Bereich der Achse von unzureichender Qualität.

Mehrere Ausführungsbeispiele des Gegenstands der Erfindung sind in der Zeichnung näher veranschaulicht. In der Zeichnung zeigen:

Fig. 1 eine schematische Seitenansicht eines Käsefertigers nach der Erfindung in einer ersten Ausführungsform,

Fig. 2 eine vereinfachte Draufsicht zu Fig. 1,

Fig. 3 eine Seitenansicht ähnlich Fig. 1 einer zweiten Ausführungsform eines Käsefertigers nach der Erfindung,

Fig. 4 eine Draufsicht ähnlich Fig. 2 zu Fig. 3,

Fig. 5 eine Seitenansicht ähnlich Fig. 1 und 3 einer dritten Ausführungsform eines Käsefertigers nach der Erfindung, und

· Fig. 6 eine Draufsicht ähnlich Fig. 2 und 4 zu Fig. 5.

Die in der Zeichnung veranschaulichten Ausführungen von Käsefertigern bestehen übereinstimmend aus einem Behälter 1, der über Stützfüße 2 auf dem Boden aufstellbar ist, und aus einem ortsfest oberhalb des Behälters 1 angeordneten, am Behälter 1 abgestützten Doppelrührwerk 3.

Der Behälter 1 besitzt eine senkrechte Behälterwand, die sich aus zwei in Draufsicht kreisbogenabschnittsförmigen Wandteilen 4,5 zusammensetzt. Dementsprechend besitzt der Innenraum 6 des Behälters 1 eine horizontale Querschnittsform in Gestalt von zwei aneinandergrenzenden Kreisabschnitten.

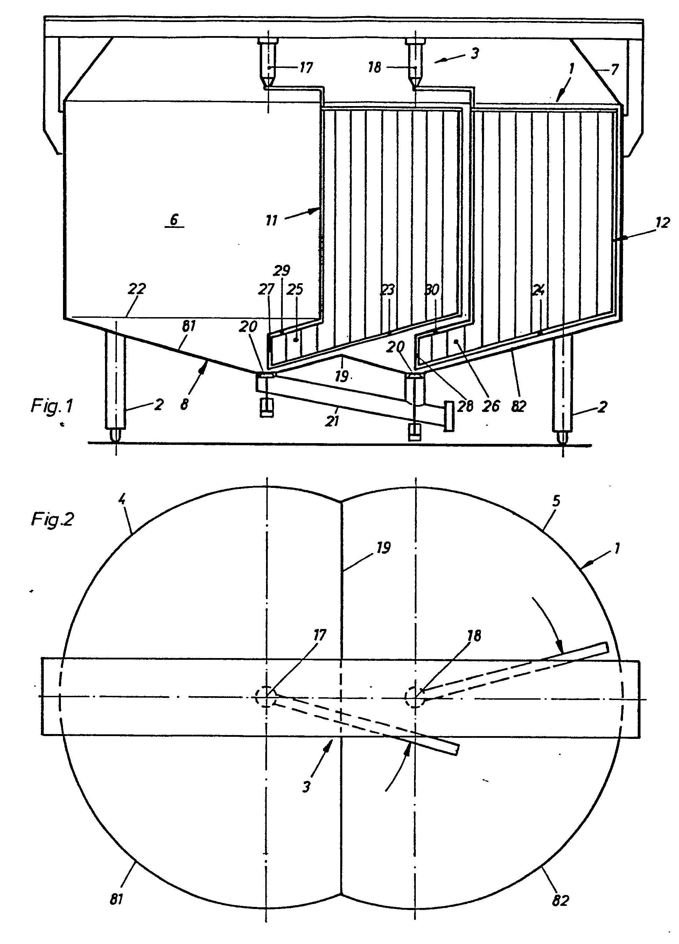

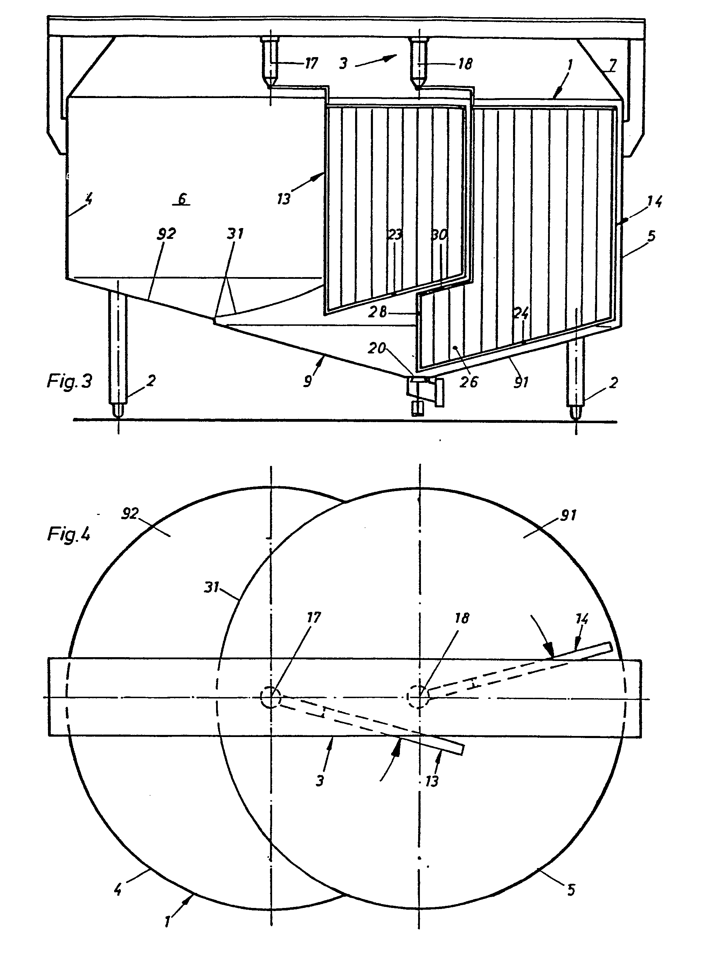

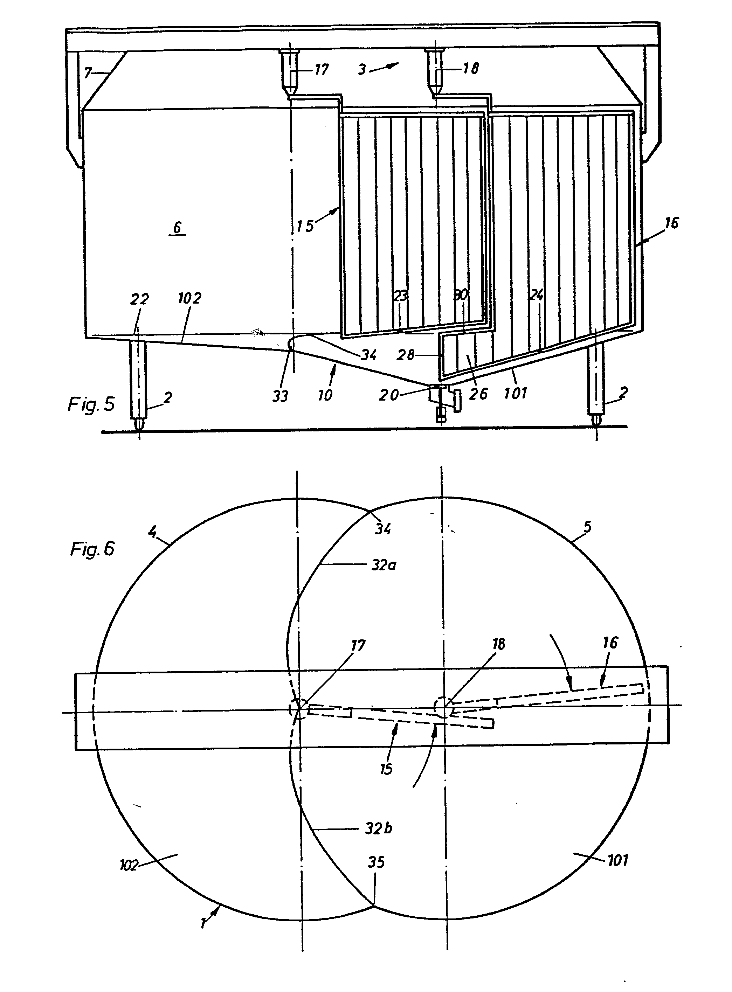

Der Behälter 1 kann oberseitig durch einen Deckel 7 abgeschlossen werden und besitzt ferner einen Boden, der als Ganzes bei der Ausführung nach Fig. 1 und 2 mit 8, bei der Ausführung nach Fig. 3 und 4 mit 9 und bei der Ausführung nach Fig. 5 und 6 mit 10 bezeichnet ist.

Das Doppelrührwerk 3 umfaßt zwei Schneid- und Rührflügel, die bei der Ausführung nach Fig. 1 und 2 mit 11 und 12, bei der Ausführung nach Fig. 3 und 4 mit 13 und 14 und bei der Ausführung nach Fig. 5 und 6 mit 15 und 16 bezeichnet sind. Die Schneid- und Rührflügel 11, 12 bzw. 13, 14, bzw. 15, 16 laufen angetrieben im Behälterinnenraum 6 um zueinander parallele, jeweils im Kreismittelpunkt der kreisbogenabschnittsförmigen Wandteile 4,5 angeordnete vertikale Drehachsen 17, 18 um und durchlaufen einander überlappende Arbeitskreise. Bei den dargestellten Beispielen sind die Schneid- und Rührflügel 11, 12 bzw. 13, 14 bzw. 15, 16 exzentrisch zu ihrer Drehachse 17 bzw. 18 angeordnet und überstreichen eine Arbeitsfläche, deren Außenkreisradius größer ist als der gegenseitige Abstand der Drehachsen 17, 18.

Statt dessen ist es jedoch auch möglich, Schneid- und Rührflügel vorzusehen, bei denen der Abstand der Drehachsen 17, 18 dem Außenkreisradius ihrer Arbeitsfläche gleich oder annährend gleich ist. In diesem Falle können die Schneid- und Rührflügel unmittelbar von der zugehörigen Drehachse ausgehen. Es versteht sich, daß bei einer derartigen Ausgestaltung der Abstand der Kreismittelpunkte der kreisbogenabschnittsförmigen Wandteile 4,5 gleich oder annähernd gleich dem Kreisradius zu wählen ist.

Die Behälterböden 8,9 bzw. 10 sind jeweils aus zwei in der Grundform eines Kreiskegels mit nach unten gerichteter Kegelspitze ausgebildeten, unmittelbar aneinandergrenzenden Bodenteilen 81, 82 bzw. 91, 92 bzw. 101, 102 zusammengesetzt, deren Kegelachsen mit den Drehachsen 17, 18 der Schneid- und Rührflügel 11, 12 bzw. 13, 14 bzw. 15, 16 zusammenfallen.

Bei der Ausführung gemäß Fig. 1 und 2 sind beide Bodenteile 81, 82 als untereinander gleiche Kreiskegelabschnitte ausgebildet, die entlang einer in Draufsicht (Fig. 2) geraden, in der vertikalen Quermittelebene des Behälters 1 gelegenen Durchdringungslinie 19 aneinandergrenzen und im Bereich ihrer beiden Kegelspitzen mit je einer verschließbaren Ablauföffnung 20 versehen sind. Beide Ablauföffnungen 20 münden in einen gemeinsamen Ablaufkanal 21. Diese Ausgestaltung hat den Vorteil der Baugleichheit der Bodenteile 81, 82 und den Vorteil einer über den gesamten Umfang gleichbleibenden Höhe der Behälterwand, da beide Kreiskegelabschnitte von einer gemeinsamen Basisebene 22 ausgehen, in deren Höhe die Bodenteile 81, 82 mit den Wandteilen 4, 5 der Behälterwand verbunden sind.

Bei dieser Ausgestaltung des Bodens 8 haben die Bodenrandstreben 23, 24 der Schneid- und Rührflügel 11, 12 einen zu den Kegelmantellinien des von ihnen überstrichenen Bodenteils 81 bzw. 82 parallel ansteigenden Verlauf, und beide Schneid- und Rührflügel 11, 12 besitzen in ihrem unteren Bereich einen inneren, bis zu ihrer zugehörigen Drehachse 17 bzw. 18 zurückspringenden Ansatz 25 bzw. 26, der unterseitig von einer bis zur Drehachse 17 bzw. 18 führenden Verlängerung der Bodenrandstrebe 23 bzw. 24, innenseitig von einer mit der Drehachse 17 bzw. 18 zusammenfallenden vertikalen Innenrandstrebe 27 bzw. 28 und oberseitig von einer Abschlußrandstrebe 29 bzw. 30 begrenzt ist. Die Abschlußrandstreben 29, 30 erstrecken sich parallel zur Bodenrandstrebe 23 bzw. 24 des jeweils benachbarten Schneid- und Rührflügels 11 bzw. 12 und untergreifen deren Arbeitsflächen in dichtem Abstand. Bei untereinander gleicher Ausgestaltung der Schneid- und Rührflügel 11, 12 ist auf diese Weise sichergestellt, daß der gesamte Innenraum 6 unter Einschluß des im Bodenbereich befindlichen Teils vollständig von den Schneid- und Rührflügeln bei deren Umlauf erfaßt wird.

Bei der Ausführung nach Fig. 3 und 4 umfaßt der Boden 9 einen ersten Bodenteil 91 in der Form eines vollständigen Kreiskegels, während der zweite Bodenteil 92 die Form eines Kreiskegelabschnitts mit kreisbogenförmiger innerer Abschnittlinie 31 besitzt und entlang dieser an den ersten Bodenteil 91 an dessen Umfang angrenzt. Die Kegelmantellinien des zweiten Bodenteils 92 erstrecken sich parallel zu den jeweils winkelgleichen Kegellinien des angrenzenden Bereiches des ersten Bodenteils 91, d.h. der Kegelwinkel beider Bodenteile 91, 92 ist gleich groß. Dementsprechend geht bei Entleerungsvorgängen Gut aus dem Bereich des Bodenteils 92 in den Bereich des Bodenteils 91 über, der im Bereich seiner Kegelspitze mit der verschließbaren Ablauföffnung 20 versehen ist. Diese Ausführung kommt daher mit einem Ablauf aus und sichert dennoch eine vollständige Entleerung. In Fig. 3 ist im Bereich der Ausschnitt- bzw. Grenzlinie 31 eine kleine vertikale Stufe veranschaulicht, jedoch können die beiden Bodenteile 91, 92 auch stufenlos aneinandergrenzen, was aus Gründen der Reinigungsfreundlichkeit bevorzugt ist.

Auch bei dieser Ausführung haben die Bodenrandstreben 23, 24 der Schneid- und Rührflügel 13, 14 einen zu den Kegelmantellinien des von ihnen überstrichenen Bodenteils 91, 92 parallel ansteigenden Verlauf, und nur der Schneid- und Rührflügel 14 hat in seinem unteren Bereich wieder einen inneren, unterhalb des Arbeitsbereiches des anderen Schneid- und Rührflügels 13 bis zu seiner Drehachse 18 zurückspringenden Ansatz 26, der wiederum unterseitig von einer bis zur Drehachse 18 führenden Verlängerung der Bodenrandstreben 24, innenseitig von einer mit der Drehachse 18 zusammenfallenden vertikalen Innenrandstrebe 28 und oberseitig von einer Abschlußrandstrebe 30 begrenzt ist, die sich parallel zur Bodenrandstrebe 23 des benachbarten Schneid- und Rührflügels 13 erstreckt und deren Arbeitsfläche in dichtem Abstand untergreift.

Bei der Ausführung nach Fig. 5 und 6 sind beide Bodenteile 101, 102 des Bodens 10 als voneinander verschiedene, jedoch wieder von einer gemeinsamen Basisebene 22 ausgehende Kegelabschnitte ausgebildet, von denen der erste 101 einen kleineren und der zweite Bodenteil 102 einen größeren Kegelwinkel aufweist. Die beiden Bodenteile 101, 102 grenzen entlang einer zweiflügeligen, zu einer vertikalen Längsmittelebene durch den Behälter 1 in Draufsicht symmetrischen Durchdringungskurve 32a, 32b aneinander, deren gemeinsamer Ausgangspunkt 33 auf der Drehachse 17 des Schneid- und Rührflügels 15 liegt und deren Endpunkte 34, 35 mit den Verschneidungslinien zwischen den Wandteilen 4, 5 zusammenfallen. Die verschließbare Ablauföffnung 20 ist im Bereich der Kegelspitze des ersten Bodenteils 101 angeordnet, und bei Entleerungsvorgängen gelangt Gut aus dem Bereich des zweiten Bodenteils 102 durch Schwerkraftwirkung in den Bereich des ersten Bodenteils 101, so daß auch hier wie bei der Ausführung nach Fig. 3 und 4 eine vollständige Entleerung des Behälters 1 über einen einzigen Ablauf gewährleistet ist.

Der Kegelwinkel des Bodenteils 102 wird so gewählt, daß die Schrägneigung der Kegelmantellinien in jedem Fall ausreicht, um die gewünschte zuverlässige und vollständige Entleerung sicherzustellen. Dies gilt generell auch für die Kegelwinkel bei den Bodenteilen der Böden 8 bzw. 9.

Die Schneid- und Rührflügel 15, 16 haben eine den Schneid- und Rührflügeln 13, 14 entsprechende Ausbildung, wobei jedoch beim Schneid- und Rührflügel 16 der Ansatz 26 entsprechend dem größeren Kegelwinkel des Bodenteils 102 kleiner ist und eine obere Abschlußstrebe 30 besitzt, die sich zwar parallel zur Bodenrandstrebe 23 des benachbarten Schneid- und Rührflügels 15 erstreckt, dabei jedoch nicht parallel zur Bodenrandstreibe 24 verläuft. Nur der Vollständigkeit halber sei angemerkt, daß sowohl die Wandteile 4, 5 als auch die Böden 8, 9, 10 aus Edelstahlblech bestehen und entlang ihrer Grenzlinien untereinander verschweißt sind. Angemerkt sei schließlich auch noch, daß die Schneid- und Rührflügel 11, 12, 13, 14, 15, 16 aus einem die Kontur vorgebenden Rahmen bestehen, in dessen Ebene im Abstand nebeneinander vertikale Drähte, Messerklingen od.dgl. abgestützt sind.

## Patentansprüche

1. Käsefertiger, bestehend aus einem Behälter mit einer sich aus zwei kreisbogenabschnittsförmigen Wandteilen zusammensetzenden Behälterwand und einem von dieser umgrenzten, mit zumindest einer verschließbaren Ablauföffnung versehenen Behälterboden, und aus einem ortsfest oberhalb des Behälters abgestützten Doppelrührwerk mit zwei Schneid- und Rührflügeln, die im Behälterinnenraum um zueinander parallele, jeweils im Kreismittelpunkt der kreisbogenabschnittsförmigen Wandteile angeordnete vertikale Drehachsen angetrieben um- und einander überlappende Arbeitskreise durchlaufen, dadurch gekennzeichnet, daß der Behälterboden (8; 9; 10) aus zwei jeweils in der Grundform eines Kreiskegels mit nach unten gerichteter Kegelspitze ausgebildeten, unmittelbar aneinandergrenzenden Bodenteilen (81; 82; 91; 92; 101, 102) zusammengesetzt ist, deren Kegelachsen mit den Drehachsen (17, 18) der Schneid- und Rührflügel (11, 12; 13, 14; 15, 16) zusammenfallen, und daß die Bodenrandstreben (23, 24) der Schneid- und Rührflügel einen zu den Kegelmantellinien des von ihnen überstrichenen Bodenteils parallel ansteigenden Verlauf aufweisen, wobei der gesamte Innenraum (6) unter Einschluß des im Bodenbereich befindlichen Teils vollständig von den Schneid- und Rührflügeln bei deren Umlauf erfaßt wird.

2. Käsefertiger nach Anspruch 1, dadurch gekennzeichnet, daß beide Bodenteile (81, 82) als untereinander gleiche Kreiskegelabschnitte ausgebildet sind, die entlang einer in Draufsicht geraden, in der vertikalen Quermittelebene des Behälters (1) gelegenen Durchdringungslinie (19) aneinandergrenzen und im Bereich ihrer beiden Kegelspitzen mit je einer verschließbaren Ablauföffnung (20) versehen sind.

3. Käsefertiger nach Anspruch 2, dadurch gekennzeichnet, daß beide Ablauföffnungen (20) in einen gemeinsamen Ablaufkanal (21) münden.

4. Käsefertiger nach Anspruch 1, dadurch gekennzeichnet, daß der erste Bodenteil (91) die Form eines vollständigen Kreiskegels aufweist, der zweite Bodenteil (92) die Form eines Kreiskegelabschnitts mit kreisbogenförmiger innerer Ausschnittslinie (31) besitzt und entlang dieser an den ersten Bodenteil angrenzt, und daß beide Bodenteile untereinander gleiche Kegelwinkel aufweisen.

5. Käsefertiger nach Anspruch 4, dadurch gekennzeichnet, daß beide Bodenteile (91, 92) stufenlos aneinandergrenzen.

6. Käsefertiger nach Anspruch 4 oder 5, dadurch gekennzeichnet, daß die verschließbare Ablauföffnung (20) im Bereich der Kegelspitze des ersten Bodenteils (91) vorgesehen ist.

7. Käsefertiger nach Anspruch 1, dadurch gekennzeichnet, daß beide Bodenteile (101, 102) als voneinander verschiedene, jedoch von einer gemeinsamen horizontalen Basisebene (22) ausgehende Kegelabschnitte ausgebildet sind, von denen der erste (101) einen kleineren und der zweite Bodenteil (102) einen größeren Kegelwinkel aufweist, daß die beiden Bodenteile entlang einer zweiflügeligen Durchdringskurve (32a, 32b) aneinandergrenzen, deren gemeinsamer Ausgangspunkt (33) mit der Drehachse (17) eines Schneid- und Rührflügels (15) zusammenfällt, und daß die verschließbare Ablauföffnung (20) im Bereich der Kegelspitze des ersten Bodenteils angeordnet ist.

8. Käsefertiger nach einem oder mehreren der Ansprüche 1 bis 7, mit Schneid- und Rührflügeln, die exzentrisch zu ihrer Drehachse angeordnet sind und eine Arbeitsfläche überstreichen, deren Außenkreisradius größer ist als der gegenseitige Abstand der Drehachsen, dadurch gekennzeichnet, daß zumindest einer der beiden Schneid- und Rührflügel (11, 12; 13, 14; 15, 16) in seimen unteren Bereich einen inneren, unterhalb des Arbeitsbereiches des benachbarten Schneid- und Rührflügels bis zu seiner Drehachse (17, 18) zurückspringenden Ansatz (26) aufweist, der unterseitig von einer bis zur Drehachse (17, 18) führenden Verlängerung der Bodenrandstrebe (23, 24), innenseitig von einer mit der Drehachse zusammenfallenden vertikalen Innenrandstrebe (27, 28) und oberseitig von einer Abschlußrandstrebe (29, 30) begrenzt ist, die sich parallel zur Bodenrandstrebe des benachbarten Schneid- und Rührflügels erstreckt und deren Arbeitsfläche in dichtem Abstand untergreift.

## Revendications

1. Bassin à fromage, composé d'un récipient comportant une paroi constituée de deux éléments de paroi en forme d'arc de cercle et un fond, limité par ces éléments de paroi, comportant au moins une ouverture d'évacuation qui peut être fermée, et d'un agitateur double porté de façon fixe par un support situé au-dessus du récipient, et comportant deux ailettes de coupe et d'agitation, qui décrivent, dans l'espace intérieur du récipient, des cercles de travail qui se recouvrent partiellement, en étant entraînées autour de deux axes de rotation verticaux parallèles, disposés chacun au centre d'un des éléments de paroi en forme d'arc de cercle, caractérisé en ce que le fond de récipient (8; 9; 10) est constitué de deux parties (81; 82, 91, 92;; 101, 102) immédiatement adjacentes entre elles, présentant comme forme de base un cône de révolution dont la pointe est tournée vers le bas, les axes des cônes coïncidant avec les axes de rotation (17, 18) des ailettes de coupe et d'agitation (11, 12; 13, 14; 15, 16), et en ce que les barres (23, 24) formant le bord inférieur des ailettes de coupe et d'agitation présentent un profil incliné parallèle aux génératrices de cône de la partie de fond qu'elles recouvrent, si bien que l'ensemble de l'espace intérieur (6), y compris la partie qui se trouve dans la zone de fond, est entièrement balayé par les ailettes de coupe et d'agitation lors de leur déplacement.

2. Bassin à fromage selon la revendication 1, caractérisé en ce que les deux parties de fond (81, 82) sont constituées comme des parties de cônes de révolution égales entre elles, qui se rejoignent le long d'une ligne d'intersection (119), droite en vue de dessus, disposée dans le plan médian vertical du récipient (1), et qu'elles comportent, dans la zone de leurs deux pointes de cône, chacune une ouverture obturable d'évacuation (20) respective.

3. Bassin à fromage selon la revendication 2, caractérisé en ce que les deux ouvertures d'évacuation (20) débouchent dans un canal d'évacuation commun (21).

4. Bassin à fromage selon la revendication 1, caractérisé en ce que la première partie de fond (91) est en forme de cône de révolution complet, que la deuxième partie de fond (92) est en forme de partie de cône de révolution avec une ligne d'intersection interne en arc de cercle (31), le long de laquelle elle se raccorde le long de celle-ci sur la première partie de fond, et en ce que les deux parties de fond présentent des angles de cône égaux.

5. Bassin à fromage selon la revendication 4, caractérisé en ce que les deux parties de fond (91, 92) se raccordent l'une à l'autre sans gradin.

6. Bassin à fromage selon la revendication 4 ou 5, caractérisé en ce que l'ouverture obturable d'évacuation (20) est prévue dans la zone de la pointe conique de la première partie de fond (91).

7. Bassin à fromage selon la revendication 1, caractérisé en ce que les deux parties de fond (101, 102) sont constituées comme des parties de cône différentes l'une de l'autre, partant cependant d'un plan de base horizontal commun (22), la première de ces parties (101) présentant un plus petit angle de cône et la deuxième partie (102) un angle de cône plus grand, en ce que les deux parties de fond sont adjacentes l'une à l'autre le long d'une courbe d'intersection (32a, 32b) à deux branches dont le point de départ commun (33) coïncide avec l'axe de rotation d'une ailette de coupe et d'agitation (15), et en ce que l'orifice obturable d'évacuation (20) est situé dans la zone de la pointe de cône de la première partie de fond.

8. Bassin à fromage selon l'une ou plusieurs des revendications 1 à 7, comportant des ailettes de coupe et d'agitation, qui sont disposées de façon excentrique par rapport à leur axe de rotation et qui recouvrent une surface de travail dont le rayon extérieur est plus grand que la distance entre les axes de rotation, caractérisé en ce qu'au moins l'une des deux ailettes de coupe et d'agitation (11, 12; 13, 14; 15; 16) présente dans sa zone inférieure un appendice (26) qui passe au-dessous de la zone de travail de l'autre ailette de coupe et d'agitation et va jusqu'à son axe de rotation (17, 18), cet appendice (26) étant limité à sa partie inférieure par un prolongement de la barre formant le bord inférieur (23, 24) qui parvient jusqu'à l'axe de rotation (17, 18), sur son côté intérieur par une barre formant un bord intérieur (27, 28) vertical coïncidant avec l'axe de rotation, et sur son côté supérieur par une barre formant un bord de limitation (29, 30), qui s'étend parallèlement à la barre formant le bord parallèle de l'autre ailette de coupe et d'agitation, et parvient par dessous à très faible distance de la surface de travail de celle-ci.

**Claims**

1. Cheese basin, consisting of a vessel with a vessel wall made up of two circular arc section-shaped wall elements and a vessel bottom defined by said wall elements and comprising at least one closable outlet, and of a stationary double stirring device supported above the vessel which comprises two cutting and stirring blades which in the interior of the vessel rotate around vertical rotation axes disposed in parallel and each being arranged in the respective circle centers of the circular arc section-shaped wall elements and pass through overlapping fields of action, characterized in that the vessel bottom (8; 9; 10) is composed of two adjoining bottom elements (81; 82; 91, 92; 101, 102) each of which has the basic shape of a circular cone with the apex of the cone directed downwardly, the cone axes of which coincide with the rotation axes (17, 18) of the cutting and stirring blades (11, 12; 13, 14; 15, 16), and that the peripheral struts of the lower part (23, 24) of the cutting and stirring blades proceed in ascending direction in parallel to the lines of the cone shell of the bottom element passed across, wherein the total interior space (6) is fully covered by the circulating movement of the cutting and stirring blades including that part located in the bottom area.

2. Cheese basin according to claim 1, characterized in that both bottom elements (81, 82) are designed as identical circular cone sections, which adjoin each other along a straight, seen from a top view, penetration line (19) located in the vertical transverse mid-plane of vessel (1) and are provided within the range of their cone apexes with one closable outlet (20) each.

3. Cheese basin according to claim 2, characterized in that the two outlet openings (20) enter into one mutual outlet channel (21).

4. Cheese basin according to claim 1, characterized in that the first bottom element (91) has the shape of a complete circular cone, the second bottom element (92) has the shape of circular cone section with circular arc-shaped inner segment line (31) and adjoins the first bottom element along said line, and that the two bottom element have identical cone angles.

5. Cheese basin according to claim 4, characterized in that the two bottom elements (91, 92) adjoin each other continuously.

6. Cheese basin according to claim 4 or 5, characterized in that the closable outlet (20) is provided within the region of the cone apex of the first bottom element (91).

7. Cheese basin according to claim 1, characterized in that the two bottom elements (101, 102) are cone sections which are different from each other, which, however, extend from a mutual horizontal base plane (22), the first bottom element (101) having a smaller and the second bottom element (102) exhibiting a larger cone angle, that the two bottom elements adjoin each other along a two-wing penetration curve (32a, 32b), the mutual starting point (33) of which coincides with the rotation axis (17) of a cutting and stirring blade (15), and that the closable outlet (20) is disposed within the region of the cone apex of the first bottom element.

8. Cheese basin according to one or a plurality of claims 1 to 7, with cutting and stirring blades disposed eccentrically to their rotation axis and passing over a work area, the outer radius of which is larger than the mutual distance of the rotation axes, characterized in that at least one of the two cutting and stirring blades (11, 12; 13, 14; 15, 16) has, in its lower region, an inner projection (26) positioned below the work area of the adjacent cutting and stirring blade which rebounds up to its rotation axis (17, 18), said projection being defined at the bottom side by an extension of the peripheral strut of the bottom (23, 24) reaching to the rotation axis (17, 18), at the inside by an inner peripheral strut (27, 28) coinciding with the rotation axis and at the top by a cover strut (29, 30), which extends in parallel to the peripheral strut of the bottom of the adjacent cutting and stirring blade and which undergrasps their work area at close proximity.

EP 0 133 587 B1

Fig.1

Fig.2

1

Fig.3

Fig.4

Fig. 5

Fig. 6